**Europäisches Patentamt**

**European Patent Office**

**Office européen des brevets**

(19)

(11) Veröffentlichungsnummer : **0 422 169 B1**

(12) # EUROPÄISCHE PATENTSCHRIFT

(45) Veröffentlichungstag der Patentschrift :
**12.07.95 Patentblatt 95/28**

(51) Int. Cl.$^6$ : **G02B 27/00,** G02B 6/42,
G02B 13/08

(21) Anmeldenummer : **90906118.6**

(22) Anmeldetag : **12.04.90**

(86) Internationale Anmeldenummer :
**PCT/DE90/00285**

(87) Internationale Veröffentlichungsnummer :
**WO 90/13054 01.11.90 Gazette 90/25**

(54) **OPTISCHES SYSTEM ZUR ABBILDUNG DES LICHTS VON LICHTQUELLEN.**

(30) Priorität : **15.04.89 DE 3912496**
**22.05.89 DE 3916658**
**22.05.89 DE 3916606**
**14.06.89 DE 3919484**

(43) Veröffentlichungstag der Anmeldung :
**17.04.91 Patentblatt 91/16**

(45) Bekanntmachung des Hinweises auf die
Patenterteilung :
**12.07.95 Patentblatt 95/28**

(84) Benannte Vertragsstaaten :
**DE FR GB IT NL**

(56) Entgegenhaltungen :
**US-A- 4 203 652**
**US-A- 4 318 594**
**K. TRADOWSKY: "Laser", 4. Auflage, 1979,**
**Vogel-Verlag, (Wurzburg, DE), sieten112-113**

(73) Patentinhaber : **Optische Werke G.**
**Rodenstock**
**Isartalstrasse 43**
**D-80469 München (DE)**

(72) Erfinder : **HOFBAUER, Engelbert**
**Am Kirchplatz 6**
**D-8308 Pfeffenhausen (DE)**
Erfinder : **SCHERER, Ingrid**
**Sternstr. 16**
**D-8000 München 22 (DE)**
Erfinder : **BLEICHER, Jakob**
**Freseniustr. 51a**
**D-8000 München 60 (DE)**
Erfinder : **HETZ, Siegried**
**Unterkienberg 21**
**D-8051 Allershausen (DE)**
Erfinder : **MATERN, Ulrich**
**Sonnwendstr. 13**
**D-8120 Weilheim (DE)**

(74) Vertreter : **Münich, Wilhelm, Dr. et al**
**Kanzlei Münich, Steinmann, Schiller**
**Wilhelm-Mayr-Str. 11**
**D-80689 München (DE)**

## Beschreibung

## Technisches Gebiet

Die Erfindung bezieht sich auf ein optisches System mit einer astigmatischen Lichtquelle, die ein Lichtbündel mit elliptischen Strahlquerschnitt emitiert, einer Kollimatorlinse, zum Kollimieren der Lichtbündel der Lichtquelle und wenigstens zwei zylindrischen Linsen-Elementen, die ein afokales System bilden und eine Änderung der Form des Strahlquerschnittes des aus der Kollimatorlinse austretenden Lichtbündels und eine Korrektur des Astigmatismus der Lichtquelle bewirken.

## Stand der Technik

Das Licht einer Reihe von Lichtquellen, darunter der gegenwärtig immer mehr an Bedeutung gewinnenden Laserdioden, scheint in unterschiedlichen Ebenen von "Punktlichtquellen" auszugehen, die in Richtung der optischen Achse einen Abstand aufweisen. Diesen Abstand, den man auch als astigmatische Differenz bezeichnet, beträgt bei gegenwärtig gebräuchlichen Laserdioden einige µm. Diese astigmatische Differenz führt bei einer Kollimation des Lichtbündels beispielsweise von Laserdioden mit üblichen Kollimatoren zu einer "nicht punktförmigen" Abbildung, die insbesondere bei Laserscannern oder sog. "Light Pen's" störend ist. Deshalb ist es in der Regel erforderlich, eine Astigmatismuskorrektur vorzusehen.

Darüberhinaus haben Laserdioden häufig in unterschiedlichen Ebenen verschiedene Abstrahlwinkel. Kollimiert man ein derartiges Lichtbündel mit einem herkömlichen Kollimator, so erhält man ein Lichtbündel mit nicht-kreisförmigen Querschnitt. Diese Abweichung von der Kreisform ist jedoch in einer Reihe von Anwendungsfällen nicht erwünscht.

Ergänzend wird hierzu auf den Übersichtsartikel "Specifying Laser Diode Optics" in Laser Focus/Electro-Optics, March 1984, S.44 ff verwiesen. Auf diesen Artikel wird im übrigen zur Erläuterung aller hier nicht näher erläuterten Begriff ausdrücklich Bezug genommen !

Zur Astigmatismuskorrektur ist es beispielsweise aus der DE-C-22 66 032 oder aus dem vorstehend genannten Übersichtsartikel bekannt, in den Strahlengang eine Zylinderlinse einzubringen, die den "astigmatischen Fehler" für eine bestimmte astigmatische Differenz zumindest vermindert.

Ferner ist in der US-A-3 396 344 vorgeschlagen worden, in den parallelen Strahlengang nach dem Kollimator zwei Zylinderlinsen einzubringen.

Weitere Vorschläge zur Astigmatismuskorrektur sind in der US-A-4 203 653 und der US-A-4 318 594 veröffentlicht. In diesen Druckschriften ist ein optisches System mit einem optischen Glied mit astigmatischer Wirkung und mit einem Abbildungssystem beschrieben. Das optische Glied mit astigmatischer Wirkung weist zwei Zylinderlinsen-Elemente mit astigmatischer Wirkung auf.

Diese Möglichkeit der Astigmatismuskorrektur hat jedoch keine größere Verbreitung gefunden. Statt dessen ist vorgeschlagen worden, den Astigmatismus von Laserdioden mit zwei anamorphotischen Prismen sowie gegebenenfalls einer zusätzlichen Zylinderlinse zu korrigieren. Hierzu wird auf den bereits genannten Übersichtsartikel sowie auf den Laserkopf der Fa. Melles Griot verwiesen.

Nun haben aber beispielsweise Laserdioden nicht nur von Bauart zu Bauart, sondern auch innerhalb einer Baureihe aufgrund von Herstelltoleranzen zwischen verschiedenen Fertigungschargen unterschiedliche astigmatische Differenzen. Darüberhinaus ändern sich die astigmatischen Differenzen aufgrund von Alterungserscheinungen im Laufe der üblichen Einsatzzeit einer Laserdiode.

Deshalb wäre es wünschenswert, den astigmatischen Korrektionswert einstellen zu können. Dies ist bei den bekannten Systemen nicht oder nur in einer Weise möglich, daß bei der Einstellung der Astigmatismuskorrektur beide Abstrahlrichtungen beeinflußt werden, so daß die Kollimation zusätzlich "nachgestellt" werden muß.

Zur Änderung des Querschnitts des Lichtbündels ist es aus dem bereits erwähnten Übersichtsartikel "Specifying Laser Diode Optics" in Laser Focus/Electro-Optics, March 1984, S.44 ff bekannt, zwei anamorphotischen Prismen zu verwenden. Ferner ist in der ebenfalls bereits erwähnten US-PS 3 396 344 vorgeschlagen worden, in den parallelen Strahlengang nach dem Kollimator zwei Zylinderlinsen einzubringen, von denen eine eine kurze Brennweite und die andere eine lange Brennweite aufweist. Diese Möglichkeit der Strahlquerschnittskorrektur hat jedoch keine größere Verbreitung gefunden.

Statt dessen ist in praktischen Realisierung immer versucht worden, eine Strahlquerschnittskorrektur von Laserdioden mit zwei anamorphotischen Prismen vorzunehmen. Hierzu wird exemplarisch auf den Laserkopf der Fa. Melles Griot verwiesen. Derartige Laserköpfe haben aber den Nachteil, daß sie aufgrund der beiden anamorphotischen Prismen eine vergleichsweise große Bauform und großes Gewicht haben. Ferner ist die Einhaltung des Prismenwinkel fertigungstechnisch sehr aufwendig.

**Darstellung der Erfindung**

Der Erfindung liegt die Aufgabe zugrunde, ein optisches System zur Abbildung des Lichts von Lichtquellen, die insbesondere in unterschiedlichen Ebenen verschiedene Abstrahlwinkel aufweisen können, anzugeben, dessen Astigmatismus-Korrektionswert zur Korrektur variierender astigmatischer Differenzen einstellbar ist.

Ferner soll erfindungsgemäß ein optisches System zur Änderung der Form des Strahlquerschnittes von Lichtbündeln und insbesondere zur Änderung der Form des Strahlquerschnittes von Laserdioden, angegeben werden, das eine kurze Bauform aufweist.

Diese Aufgabe wird erfindungs gemäß durch die Merkmale des Anspruchs 1 gelöst.

Im Anspruch 3 ist ein bevorzugter Brennweitenbereich für die Systeme gemäß den Ansprüche 1 und 2 angegeben, gemäß dem

$$6 \text{ mm} < |f_1| < 50 \text{ mm bei Aufweitung}$$
$$6 \text{ mm} < |f_2| < 50 \text{ mm bei Komprimierung}$$

des Strahls ist.

Bei der Verwendung von Zylinderlinsen ist es selbstverständlich möglich, die Fläche ohne Zylinderwirkung als normale sphärische oder asphärische Fläche auszubilden. Gemäß Anspruch 4 ist es jedoch bevorzugt, wenn diese Fläche eine Planfläche ist.

Die Erfindung wird nachstehend anhand eines Ausführungsbeispiels unter Bezugnahme auf die Zeichnung näher beschrieben, in der zeigen:

Figur 1       einen Linsenschnitt durch ein optisches System zur Astigmatismuskorrektion,
Figur 2       vergrößert einen Teil des Systems gemäß Figur 1, und
Figur 3       einen Linsenschnitt durch ein erfindungsgemäßes optisches System zur Strahlformung.

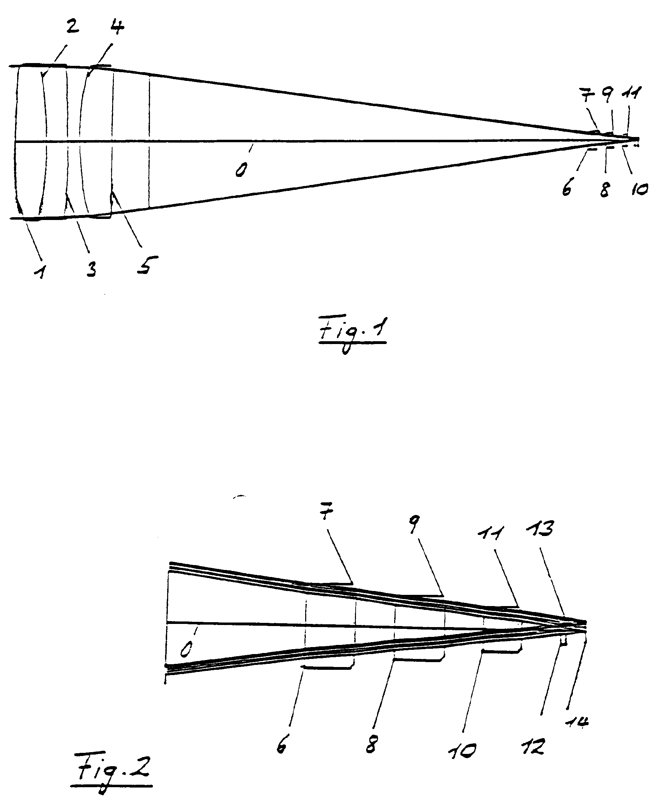

Fig. 1 zeigt einen Linsenschnitt durch ein optisches System, das ein in üblicher Weise aufgebautes Kollimatorobjektiv (Fläche 1 bis 5) sowie zwei Zylinderlinsen (Fläche 6 und 7 bzw. 8 und 9) aufweist. Die Flächen 10 und 11 gehören zu einer planparallelen Platte, die beispielsweise als Filter etc. dienen kann. Mit 12 und 13 ist das Deckglas der Laserdiode und mit 14 die strahlende Fläche der Laserdiode bezeichnet.

Fig. 2 zeigt vergrößert die Flächen 6 bis 14 des in Fig. 1 dargestellten Systems.

Bei dem dargestellten Ausführungsbeispiel weisen die Zylinderlinsen in einem Schnitt der Zylinderfläche eine "Planwirkung" auf, d.h. ein Radius der Zylinderlinsen ist unendlich. Der andere Radius wird entsprechend dem zu korrigierenden Astigmatismuswert gewählt und kann bei dem dargestellten Ausführungsbeispiel typischerweise zwischen 600 mm und 5000 mm variiert werden, um unterschiedliche Kompensationsbereiche zu erhalten. Ferner ist die andere Fläche der beiden Zylinderlinsen, d.h. die Fläche ohne Zylinderwirkung eine Plantläche. Deshalb sind in der nachfolgenden Tabelle sämtliche Krümmungsradien der Zylinderlinsen mit "∞" angegeben.

Bei dem dargestellten Ausführungsbeispiel ist die von den Flächen 6 und 7 gebildete Zylinderlinse in Richtung der optischen Achse 0 verschiebbar, während die zweite Zylinderlinse (gebildet von Flächen 8 und 9) feststehend angeordnet ist.

Die Wahl der Zylinderfläche erfolgt unter dem Gesichtspunkt, daß "flache" Radien schwieriger als "krümmere" Radien herzustellen sind:

Sollen vergleichsweise kleine Astigmatismuswerte korrigiert werden, so ist es bevorzugt, als Zylinderfläche die beiden einander zugekehrten Flächen 7 und 8 zu wählen, da dann das Gesamtsystem bei nahezu vollständigem Zusammenschieben der beiden Zylinderlinsen einen Astigmatismus nahe Null hat.

Andererseits wird man als Zylinderflächen die Flächen 6 und/oder 9 wählen, wenn vergleichsweise große Astigmatismuswerte zu korrigieren sind.

In der nachfolgenden Tabelle sind exemplarisch numerische Werte für ein Ausführungsbeispiel ohne Beschränkung des allgemeinen Erfindungsgedankens angegeben.

Dabei sind mit Ri der Krümmungsradius der Fläche i (in mm), mit di der Scheitelabstand der Flächen (i+1) und i (in mm) und mit ni bzw. vi die Brechzahl und die Abbe'sche Zahl des Materials zwischen den Flächen i und (i+1) für die d-Linie bezeichnet. (ni=1 bedeutet einen Luftraum.)

Bei dem gezeigten Ausführungsbeispiel sind die Flächen 7 und 8 Zylinderflächen. In einem Hauptschnitt haben diese Flächen den Radius ∞, in dem anderen Hauptschnitt kann der Radius je nach eingesetzter Lichtquelle zwischen ca 600 mm und 5000 mm variieren. Der gewählte Radius richtet sich nach dem zu kompensierenden Astigmatismus, dem durch den verfügbaren Außendurchmesser der Zylinderachsen bestimmten Verschiebeweg im divergenten Strahlengang und der gewünschten Positioniertoleranz sowie Fertigungsmöglichkeiten. Die Wahl eines entsprechenden Radius ist einem auf dem einschlägigen Gebiet tätigen Fachmann jederzeit möglich.

Im Normalfall stehen die Zylinderachsen bei dem gezeigten Ausführungsbeispiel aufeinander senkrecht. Gegebenenfalls kann jedoch eine zusätzliche Drehmöglichkeit der Zylinderachsen um die optische Achse 0 vorgesehen werden. Auch ist es möglich, die einzelnen Radien der Zylinderlinsen so zu wählen, daß zusätzlich auch eine Korrektion des Strahlquerschnittes von elliptisch auf kreisförmig erfolgt, wie dies bei dem zweiten Ausführungsbeispiel der Erfindung der Fall ist.

## Tabelle

| | | |
|---|---|---|
| R1 = 246,7 | | |
| | d1 = 9,0 | n1 = 1,59 | v1 = 61 |
| R2 =-126,8 | | |
| | d2 = 6,0 | n2 = 1,78 | v2 = 26 |
| R3 =-617,5 | | |
| | d3 = 3,5 | n3 = 1 | |
| R4 = 105,54 | | |
| | d4 = 9,0 | n4 = 1,59 | v4 = 61 |
| R5 = 464,7 | | |
| | d5=134,6 | n5 = 1 | |
| R6 = ∞ | | |
| | d6 = 2,6 | n6 = 1,52 | v6 = 64 |
| R7 = ∞ | | |
| | d7 = 2,0 | n7 = 1 | |
| R8 = ∞ | | |
| | d8 = 2,6 | n8 = 1,52 | v8 = 64 |
| R9 = ∞ | | |
| | d9 = 2,0 | n9 = 1 | |
| R10= ∞ | | |
| | d10= 2,0 | n10= 1,52 | v10= 64 |
| R11= ∞ | | |
| | d11= 2,0 | n11= 1 | |
| R12= ∞ | | |
| | d12= 0,25 | n12= 1,49 | v12= 70 |
| R13= ∞ | | |

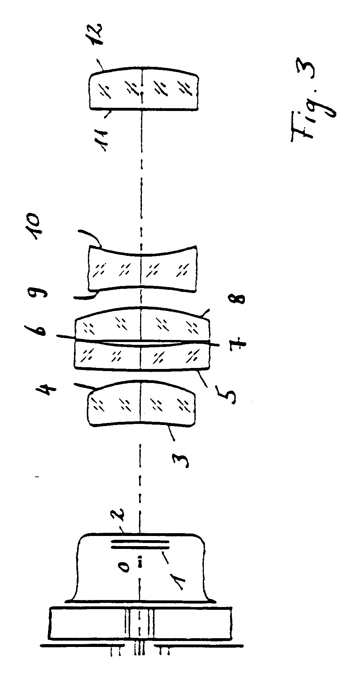

Fig. 3 zeigt einen Linsenschnitt durch ein erfindungsgemäßes optisches System zur Strahlformung, das eine Laserdiode L mit einem Deckglas (Flächen 1 und 2) und ein in üblicher Weise aufgebautes Kollimatorobjektiv (Fläche 3 bis 8) sowie zwei Zylinderlinsen (Fläche 9 und 10 bzw. 11 und 12) aufweist. Bei dem dargestellten Ausführungsbeispiel weist eine Zylinderlinse (Flächen 9 und 10) zwei Zylinderflächen und die andere Zylinderlinse (Flächen 11 und 12) eine Zylinderfläche (12) und eine Planfläche (11) auf. Sämtliche Zylinderflächen haben in einem Schnitt eine "Planwirkung" auf, d.h. ein Radius der Zylinderlinsen ist unendlich. In der Tabelle ist deshalb nur der andere Schnitt angegeben. Dabei ist der Winkel α=0°. Zur Korrektur von Fertigungsfehlern insbesondere der Zylinderlinse mit zwei astigmatischen Flächen können die beiden Linsen um "einige Grad" gegeneinander verdreht werden.

In der nachfolgenden Tabelle sind exemplarisch numerische Werte für ein Ausführungsbeispiel ohne Beschränkung des allgemeinen Erfindungsgedankens angegeben. Dabei sind mit Ri der Krümmungsradius der Fläche i (in mm), mit di der Scheitelabstand der Flächen (i+1) und i (in mm) und mit ni bzw. vi die Brechzahl und die Abbe'sche Zahl des Materials zwischen den Flächen i und (i+1) für die d-Linie bezeichnet (ni=1 bedeutet einen Luftraum.). Die Brennweite ist auf 10mm normiert, die tatsächliche Brennweite ist ca 9mm.

EP 0 422 169 B1

## Tabelle

Lichterzeugende Fläche d0 = 2,0

| | | |
|---|---|---|
| R1 = ∞ | | |
| | d1 = 0,3 | n1 = 1,51 | v1 = 60,4 |
| R2 = ∞ | | |
| | d2 = 4,8 | n2 = 1 | |
| R3 = -19,61 | | |
| | d3 = 2,2 | n3 = 1,66 | v3 = 35,8 |
| R4 = -6,98 | | |
| | d4 = 0,6 | n4 = 1 | |
| R5 = 55,08 | | |
| | d5 = 1,3 | n5 = 1,65 | v5 = 33,9 |
| R6 = 18,85 | | |
| | d6 = 0,3 | n6 = 1 | |
| R7 = 428,15 | | |
| | d7 = 1,8 | n7 = 1,69 | v7 = 54,7 |
| R8 = -11,07 | | |
| | d8 = 1,1 | n8 = 1 | |
| R9 = -15,14 | | |
| | d9 = 1,7 | n9 = 1,78 | v9 = 26,1 |

| | | |
|---|---|---|
| R10= 9,12 | | |
| | d10= 7,8 | n10= 1 | |
| R11= ∞ | | |
| | d11= 2,2 | n11= 1,69 | v11= 54,7 |
| R12= -11,35 | | |

Vorstehend ist die Erfindung ohne Beschränkung des allgemeinen Erfindungsgedankens beschrieben worden.

**Patentansprüche**

1.  Optisches System mit
    einer astigmatischen Lichtquelle, die ein Lichtbündel mit elliptischen Strahlquerschnitt emitiert;
    einer Kollimatorlinse, zum Kollimieren der Lichtbündel der Lichtquelle;
    wenigstens zwei zylindrischen Linsen-Elementen, die ein afokales System bilden und eine Änderung der Form des Strahlquerschnittes des aus der Kollimatorlinse austretenden Lichtbündels und eine Korrektur des Astigmatismus der Lichtquelle bewirken,
    dadurch **gekennzeichnet**, daß ein Manipulatorelement zum Verdrehen der Zylinderachsen der zwei zylindrischen Linsen-Elemente bis zu einem Winkel von maximal 20° zueinander vorgesehen ist, und daß entweder die Brennweite des in Strahlrichtung gesehen ersten zylindrischen Linsen-Elements zum Aufweiten des von der Kollimator-Linse austretenden Lichtbündels eine Brennweite hat, die zwischen -300mm und -1mm liegt oder daß die Brennweite des in Strahlrichtung gesehenen zweiten zylindrischen Linsen-Elements zum Komprimieren des von der Kollimator-Linse austretenden Lichtbündels eine Brennweite hat, die zwischen 1mm und 300mm liegt.

2.  Optisches System nach Anspruch 1,
    dadurch **gekennzeichnet**, daß wenigstens eines der Linsen-Elemente zwei Zylinderflächen (9,10) aufweist.

3.  Optisches System nach Anspruch 1 oder 2,
    dadurch **gekennzeichnet**, daß entweder die Brennweite des in Strahlrichtung gesehen ersten zylindrichen Linsen-Elements zum Aufweiten des von der Kollimator-Linse austretenden Lichtbündels ei-

5

ne Brennweite hat, die zwischen -50 mm und -6 mm liegt oder die Brennweite des in Strahlrichtung gesehen zweiten zylindrischen Linsen-Elements zum Komprimieren des von der Kollimator-Linse austretenden Lichtbündels eine Brennweite hat, die zwischen 6 mm und 50 mm liegt.

4. Optisches System nach einem der Ansprüche 1 bis 3, dadurch **gekennzeichnet**, daß wenigstens eines der Linsen-Elemente eine Planfläche (11) aufweist.

## Claims

1. An optical system with an astigmatic light source which emits a light bundle with an elliptical beam cross-section;

a collimator lens for the collimation of the light bundles of the light source;

at least two cylindrical lens elements which form an afocal system and which effect a variation in the shape of the beam cross-section of the light bundle leaving the collimator lens and correction of the astigmatism of the light source,

characterised in that a manipulator element is provided to rotate the cylinder axes of the two cylindrical lens elements relative to each other by an angle of 20° max. and in that either the focal length of the first cylindrical lens element, viewed in the direction of the beam, has a focal length for expansion of the light bundle leaving the collimator lens which is between -300 mm and -1 mm or that the focal length of the second cylindrical lens element, viewed in the direction of the beam, has a focal length for compression of the light bundle leaving the collimator lens which is between 1 mm and 300 mm.

2. An optical system in accordance with Claim 1, characterised in that at least one of the lens elements has two cylinder surfaces (9, 10).

3. An optical system in accordance with Claim 1 or 2, characterised in that either the focal length of the first cylindrical lens element, viewed in the direction of the beam, has a focal length for expansion of the light bundle leaving the collimator lens which is between -50 mm and -6 mm or that the focal length of the second cylindrical lens element, viewed in the direction of the beam, has a focal length for compression of the light bundle leaving the collimator lens which is between 6 mm and 50 mm.

4. An optical system in accordance with any of Claims 1 to 3, characterised in that at least one of the lens elements has a plane surface (11).

## Revendications

1. Système optique comportant
une source astigmatique de lumière, qui émet un faisceau lumineux à section elliptique,
une lentille collimatrice destinée à concentrer le faisceau lumineux de cette source,
au moins deux éléments de lentille cylindriques qui forment un système afocal et qui provoquent une modification de la forme de la section du faisceau sortant de la lentille collimatrice et assurent une correction de l'astigmatisme de la source lumineuse,
système caractérisé en ce qu'il comporte un élément manipulateur destiné à faire tourner l'un par rapport à l'autre les axes des deux éléments de lentille cylindriques jusqu'à un angle maximum de 20° ; et la distance focale de l'élément de lentille, qui est le premier dans le sens du rayonnement, et qui est destiné à élargir le faisceau lumineux sortant de la lentille collimatrice a une valeur comprise entre -300 mm et -1 mm, ou bien la distance focale de l'élément de lentille qui est le second dans le sens du rayonnement et qui est destiné à comprimer ce faisceau sortant de la lentille collimatrice a une valeur comprise entre 1 mm et 300 mm.

2. Système optique selon la revendication 1, caractérisé en ce que l'un au moins des éléments de lentille présente deux surfaces cylindriques (9, 10).

3. Système optique selon la revendication 1 ou 2, caractérisé en ce que, ou bien la distance focale de l'élément de lentille qui est le premier dans le sens du rayonnement et qui est destiné à élargir le faisceau lumineux sortant de la lentille collimatrice, a une valeur comprise entre -50 mm et -6 mm, ou bien la distance focale de l'élément de lentille qui est le second dans le sens du rayonnement et qui est destiné à comprimer le faisceau lumineux sortant de la lentille collimatrice a une valeur comprise entre 6 mm et 50 mm.

4. Système optique selon l'une des revendications 1 à 3, caractérisé en ce que l'un au moins des éléments de lentille présente une face plane (11).

Fig.1

Fig.2

Fig. 3

EP 0 422 169 B1